# EUROPEAN PATENT SPECIFICATION

(11) **EP 0 637 020 B1**
(45) Date of publication and mention of the grant of the patent: **13.10.1999**
(21) Application number: 93310653.6
(22) Date of filing: 30.12.1993
(51) Int. Cl.: G11B 15/675

(54) **Recording cassette mechanisms**
Aufzeichnungskassettenmechanismen
Mécanisme de cassette d'enregistrement

(30) Priority: 26.07.1993 KR 9314172
(43) Date of publication of application: 01.02.1995
(73) Proprietor: SAMSUNG ELECTRONICS CO., LTD., Suwon-city, Kyungki-do 441-373 (KR)
(72) Inventor: Cho, Young Ho, Suwon-city, Kyungki-do (KR); Choi, Do Young, Suwon-city, Kyungki-do (KR); Seo, Jae Kab, Suwon-city, Kyungki-do (KR)
(74) Representative: Stanley, David William

(56) References cited:
- EP-A- 0 449 658

## Description

The present invention relates to recording cassette mechanisms, and is concerned particularly with cassette lid opening and closing systems for magnetic recording and/or reproducing apparatus.

Magnetic recording and/or reproducing apparatus such as video tape recorders (VTRs) have already been developed in various types, and now, they are very popular in daily life through increasing demands as an important household commodity.

Most magnetic recording and/or reproducing apparatus for video use utilise a 1/2 inch tape cassette which adopts a video home system (VHS). Such a magnetic recording and/or reproducing apparatus typically includes a cassette holder into which the tape cassette is inserted, driving members for internally pulling the cassette holder into a body of the apparatus to seat it on a main deck, means for loading and unloading a magnetic tape within the tape cassette toward a rotary drum installed on the main deck, and means for allowing the magnetic tape to travel along a predetermined path.

Once the tape cassette is inserted into the cassette holder, the insertion is sensed, and the tape cassette is then placed safely on the main deck. In this state, the magnetic tape is loaded toward the rotary drum rotating at high speed by means of a pair of pole bases, thereby to record signals to or reproduce signals from the magnetic tape.

Recently, in pursuit of users' convenience, a product such as a portable camcorder, which has been developed from such magnetic recording and reproducing apparatus, has become minimized is size as well as in weight. Also, to assist in realizing a light and miniature product, a product adopting an already-developed 8mm tape cassette is generally known to public.

On the other hand, for the reason that one factor among those greatly affecting the miniaturization and lightening of the product is the deck size, a product can be miniaturized and lightened according to a scaled-down rate of deck size and technical progress can be measured by the scaled-down rate of deck size. Also, in actual application, magnetic recording and reproducing apparatus of various types are studied and developed.

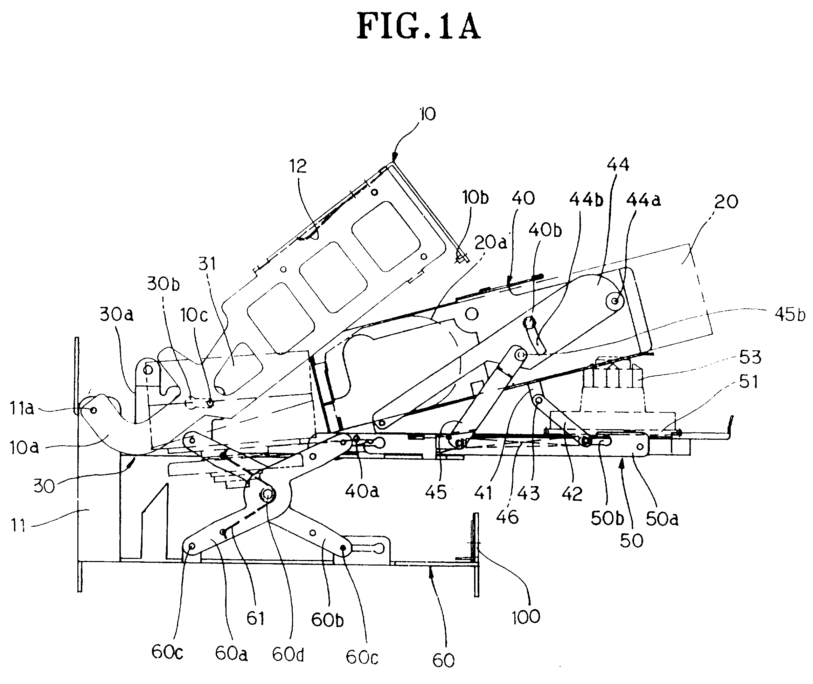

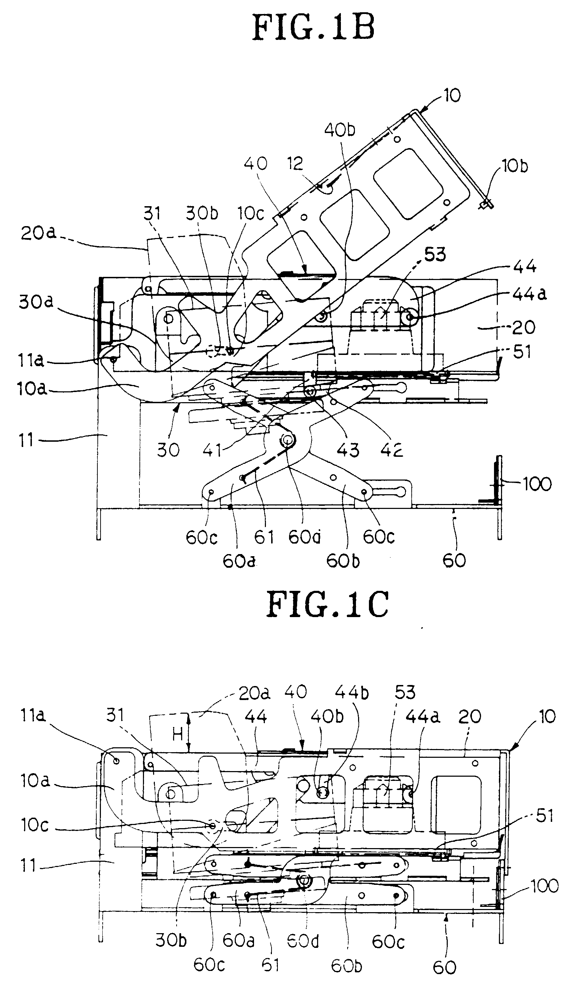

In order to maximally scale down the deck size while simplifying the components, the present applicant has filed Korean Patent Application No. 93-5016 relating to a magnetic recording and reproducing apparatus, in which a tape cassette is inserted into a cassette holder provided with a rotary drum, for primary loading of a magnetic tape, and the cassette holder is then pressed to be closed, thereby secondarily full-loading the magnetic tape to the rotary drum. Here, the rotary drum is fully held into an internal space of the tape cassette when the loading of the tape cassette is completed, so as to highly minimize the deck size. Such a magnetic recording and reproducing apparatus will be schematically described in detail below, with reference to Figures 1A, 1B and 1C of the accompanying diagrammatic drawings, which are side views illustrating respective operational states of such a magnetic recording and reproducing apparatus.

The ends of a pair of arms 10a formed by extending to a rear portion of an eject lever 10 are respectively connected to shafts 11a on the ends of a pair of brackets 11 standing on the interior of a body (not shown) of the apparatus, so that, centering around the shafts 11a, up-and-down operations for opening and closing are carried out.

During an ejecting operation, the eject lever 10 is externally exposed by a predetermined angle with respect to the body while a locking pin 10b provided on the front of the eject lever 10 is released, so that a tape cassette 20 is pulled out of the interior of the body. A pair of resilient members 12 are downwardly attached on the inner sides of the eject lever 10, and bear against the upper surface of the tape cassette 20 to prevent the tape cassette 20 from floating, while movement of the eject lever 10 is carried out.

On one side of the arm 10a of the eject lever 10, a pin 10c is formed to be fitted into an elongated hole 30b of a bracket 30a standing on the side of an upper chassis 30, thereby vertically moving the upper chassis 30 in the up-and-down directions while the eject lever 10 swings up and down. On the inner side of the eject lever 10, a cassette holder 40 for accepting the tape cassette 20, and a slider 50 for horizontally moving the cassette holder 40 in back-and-forth directions are installed. Also, the upper chassis 30 having a rotary drum 31 is installed for loading a magnetic tape (not shown) within the tape cassette 20 during the horizontal movement of the slider 50.

One end of the cassette holder 40 is connected to the end of the slider 50 by means of a shaft 40a, and a first link 41 formed around the centre of the cassette holder 40 is connected with a pin 43 to a second link 42 which is slidably moved by being inserted into an elongated hole 50b formed in a bracket 50a on the side of the slider 50. Therefore, the cassette holder 40 can swing by a predetermined angle around the shaft 40a to permit insertion and pull-out operations of the tape cassette 20.

On either side of the cassette holder 40, a lid-opening member 44 is mounted to swing upwardly and downwardly around a shaft 44a, and an elongated hole 44b is formed around the centre of the lid-opening member 44 to accept and guide a pin 40b projecting on the side of the cassette holder 40. The centre of the lid-opening member 44 and the slider 50 are connected by a third link 45 inclined by a predetermined angle, and the second and third links 42 and 45 are linked together by a resilient member 46.

Accordingly, during placing the cassette holder 40 on the slider 50, the lid-opening member 44 swings around the shaft 44a so as to open a lid 20a of the tape cassette 20.

Meanwhile, a reel base 51 is mounted on the slider 50, and a reel 53 is installed on the reel base 51 to guide a hub (not shown) of the tape cassette 20. The slider 50 can be moved horizontally in the back and forth directions by a slider moving apparatus (not shown) installed on the upper chassis 30.

A lower chassis 60 mounted with respective travelling components for driving the magnetic tape in the tape cassette 20 is installed on the lower portion of the upper chassis 30. The ends of the sides of the upper chassis 30 and lower chassis 60 are respectively connected by pins 60c in such a manner that a pair of fourth and fifth links 60a and 60b to which a Scott Russel's link mechanism is applied intersect with each other.

A resilient member 61 is provided on a shaft 60d in the centre of the fourth and fifth links 60a and 60b to connect the fourth and fifth links 60a and 60b. Therefore, the upper chassis 30 can be resiliently moved up and down in a vertical direction.

In the previously proposed magnetic recording and reproducing apparatus constructed as above, after the tape cassette 20 is inserted into the cassette holder 40 placed on the inner side of the eject lever 10 at a predetermined angle to the body of the apparatus (refer to Figure 1A), the cassette holder 40 is depressed to be closed. Subsequently, the cassette holder 40 pivots around the shaft 40a to be placed on the slider 50. At this time, the hub of the tape cassette 20 is guided by the reel 53 installed on the slider 50 and the lid-opening member 44 formed on the side of the cassette holder 40 pivots clockwise around the shaft 44a, thereby opening the lid 20a of the tape cassette 20.

When the cassette holder 40 is pushed toward the upper chassis 30, the slider moving apparatus (not shown) mounted on the upper chassis 30 moves the slider 50 horizontally toward the upper chassis 30 to perform the first loading operation of the magnetic tape with respect to the rotary drum 31 (refer to Figure 1B).

As shown in Figure 1C, once the eject lever 10 is depressed to be closed, the eject lever 10 moves downwardly around the shaft 11a and depresses the elongated hole 30b of the upper chassis 30 which receives the pin 10c, so that the upper chassis 30 is moved resiliently downwardly by means of the resilient member 61 installed on the fourth and fifth links 60a and 60b to be seated on the lower chassis 60. Here, the locking pin 10b of the eject lever 10 is engaged by a locking device 100 provided on the lower chassis 60.

However, according to the above-described magnetic recording and reproducing apparatus, since the lid 20a is in an open state even after seating the tape cassette 20 on the lower chassis 60, the overall deck is heightened due to the projecting height H of the lid 20a (refer to Figure 1C), which limits the miniaturization and lightening of the deck.

European Patent Application 0,449,658 (Sony) discloses a system in which there is provided a tape deck mechanism reduced in size by having multiple chassis that slide into and fold over each other with a cassette mechanism contained therein. The tape deck mechanism of this disclosure operates in conjunction with a special tape cassette to increase the available dead space by moving the cassette tape reels apart when the head drum chassis slides into the chassis holding the cassette.

This document reflects the preamble of appended claim 1.

Preferred embodiments of the present invention aim to solve the above-described problems. Therefore, it is an aim of such embodiments of the present invention to provide a cassette lid opening and closing system of a magnetic recording and reproducing apparatus, wherein a lid is opened when a tape cassette is seated on a slider and is closed after the tape cassette is fully placed on a lower chassis so as to lower the height of a deck which has been unnecessarily high due to the height of the lid in the open state thereof, thereby to facilitate miniaturizing and lightening of the deck.

According to the present invention, there is provided a cassette lid opening and closing system for a magnetic recording and/or reproducing apparatus, the system comprising: a cassette holder arranged to pivot by a predetermined angle around a shaft on one side of the holder and to hold a cassette tape; a slider having a reel for guiding a hub of said tape cassette and being arranged to slide said cassette holder; a lid-opening member for opening a lid of said tape cassette during seating of said cassette holder on said slider; a lid-opening member operating link having a first end resiliently mounted within an elongated hole formed in one side of said slider, a second end thereof being supported to pivot with respect to said lid-opening member to cause said lid-opening member to open said lid when said cassette holder is seated on said slider, the cassette lid opening and closing system being characterised by a lever for moving said first end of said lid-opening member operating link when said tape cassette is seated on a chassis to release a lid-pressing operation of said lid-opening member, and by lever operating means comprising a roller having a central axis connected to one end of said lever and arranged to run within an elongated hole formed in said slider and a guide block disposed on said chassis to guide said roller to allow said roller to run within said elongated hole to operate said lever and close the open lid of said tape cassette when said tape cassette is seated on said chassis.

Preferably, said guide block has an inclined face for contact with said roller to open and close said lid during unloading and loading of said tape cassette.

The invention includes a magnetic tape recording and/or reproducing apparatus provided with a system as disclosed above according to the invention.

For a better understanding of the invention, and to show how embodiments of the same may be carried into effect, reference will now be made, by way of example, to Figures 2 to 4 of the accompanying diagrammatic drawings, in which:
Figures 2A to 2D are side views showing respective operational states of one example of a magnetic recording and reproducing apparatus provided with a cassette lid opening and closing system according to the present invention;
Figure 3 is a perspective view showing a main part of the cassette lid opening and closing system of Figures 2A to 2D; and
Figure 4 is a view showing a state of the cassette lid opening and closing system of Figure 3 before and after being operated.

In the figures, like reference numerals denote like or corresponding parts.

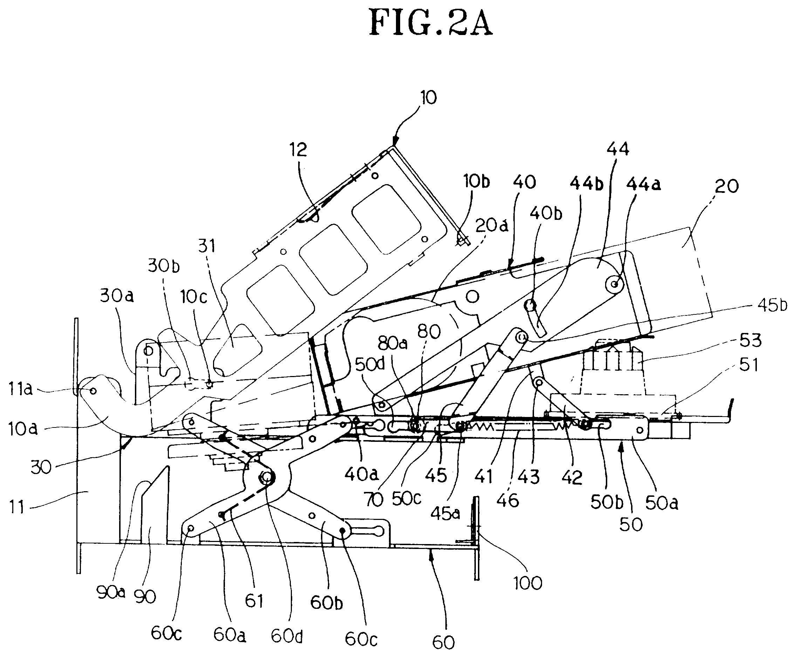

Referring to Figures 2A to 2D, respective operational states of the illustrated magnetic recording and reproducing apparatus provided are schematically illustrated, wherein similar reference numerals used in Figures 1A to 1C designate similar parts, whose detailed description thus will be omitted.

A first end of a lid-opening member operating link (hereinafter referred to as "link") 45 is resiliently supported by a spring 46 within an elongated hole 50c formed in a bracket 50a of a slider 50, and a pin 45a is fixed on the first end. A second end of the link 45 has a lid-opening member 44 which can pivot by means of a pin 45b.

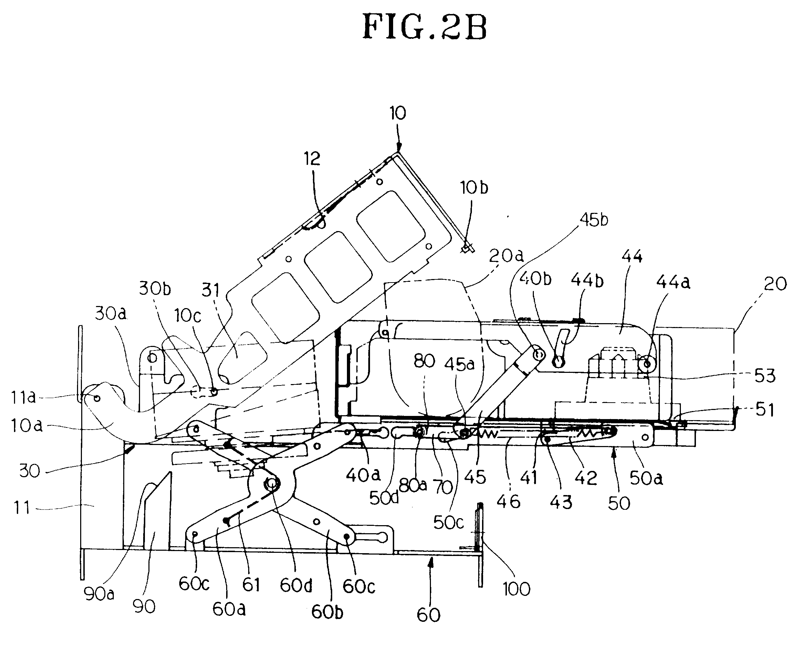

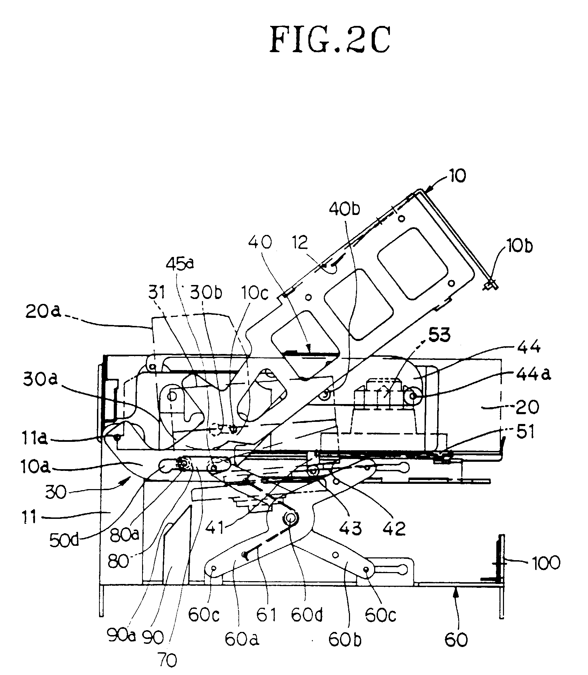

As shown in Figures 2A to 2C, the first end of the link 45 is maintained on the right side of the elongated hole 50c by means of the spring 46. In other words, in the state that a tape cassette 20 is placed into or out of a cassette holder 40 (Figure 2A), the cassette holder 20 is seated on the slider 50 (Figure 2B), or the slider 50 is positioned on an upper chassis 30 (Figure 2C), the first end of the link 45 bears against the right side of the elongated hole 50c by means of the spring 46.

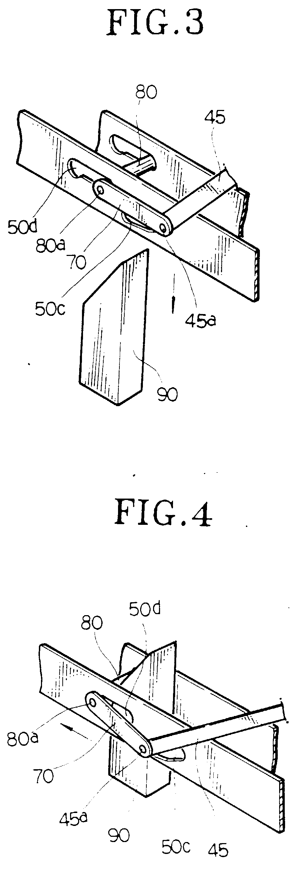

On the other hand, the pin 45a of the first end is connected to one end of a lever 70 for releasing a lid-depressing operation of lid-opening member 44 by moving the first end of the link 45 when the tape cassette 20 is seated on a lower chassis 60 (more specifically, when the slider 50 is placed on the lower chassis 60). Another end of the lever 70 is coupled to a central axis 80a of a roller 80 which is illustrated in Figure 3. The roller 80 can run within an elongated hole 50d formed in the bracket 50a of the slider 50. Once the roller 80 runs, the pin 45a of the link 45 can be moved within the elongated hole 50c.

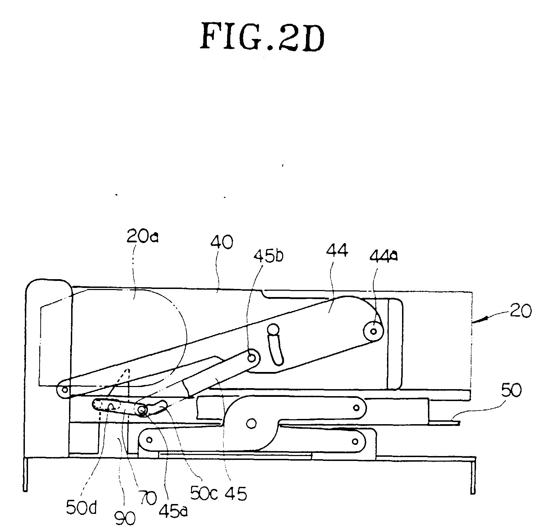

As shown in Figure 2D, when the slider 50 is seated on the lower chassis 60, the pin 45a of the link 45 is placed on the left end of the elongated hole 50c, so that the link 45 swings the lid-opening member 44 counter-clockwise with respect to a shaft 44a to close the open cassette lid 20a by its own resilient force.

A guide block 90 is installed on the lower chassis 60 to guide the roller 80 when the upper chassis 30 and slider 50 are seated on the lower chassis 60, thereby permitting the roller 80 to run within the elongated hole 50d. An oblique face 90a of the guide block 90 contacting the roller 80 is inclined by a predetermined angle to guide the roller 80 along the face 90a of the guide block 90 when the upper chassis 30 and slider 50 are seated on the lower chassis 60. Therefore, the roller 80 is moved to the left end of the elongated hole 50d, which in turn moves the lever 70 to the left. Accordingly, as shown in Figures 2A, 2B and 2C, the first end of the link 45 which has been resiliently kept on the right end of the elongated hole 50d by means of the spring 46 is moved to the left. At this time, the link 45 forcibly draws the lid-opening member 44 which, therefore, swings counter-clockwise around the shaft 44a to release the operation for pressing the lid 20a, and the lid 20a is automatically closed by its own spring force, as shown in Figure 2D.

Hereinafter, the operation of the cassette lid opening and closing system formed as above will be described in detail.

To begin with, as shown in Figure 2A, after the tape cassette 20 is inserted into the interior of the cassette holder 40 positioned on the inner side of an eject lever 10 which is exposed with respect to the body of the apparatus by a predetermined angle, the cassette holder 40 is depressed to be closed. Then, the cassette holder 40 pivots around the shaft 40a to be safely placed on the slider 50. At this time, a hub (not shown) of the tape cassette 20 is guided to be seated on a reel 53 installed on the slider 50 and, simultaneously, the lid-opening member 44 swings clockwise around the shaft 44a to open the lid 20a of the tape cassette 20. Here, one end of the spring 46 is hooked onto the pin 45a at the first end of the link 45 to exert an influence thereupon, and thus the pin 45a of the link 45 is urged resiliently to the right end of the elongated hole 50c (refer to Figure 2B).

Under this circumstances, as illustrated in Figure 2C, when the cassette holder 40 is pushed toward the upper chassis 30, the slider 50 is moved horizontally toward the upper chassis 30 by a slider moving apparatus (not shown) mounted on the upper chassis 30.

Consequently, the magnetic tape within the tape cassette 20 is first loaded on the rotary drum 31 provided on the upper chassis 30. Then, once the eject lever 10 is depressed to be closed, the eject lever 10 is moved downwardly around the shaft 11a while depressing the elongated hole 30b of the upper chassis 30 which receives the pin 10c, so that the upper chassis 30 descends resiliently in a vertical direction by the resilient member 61 installed on fourth and fifth links 60a and 60b, thereby to be seated on the lower chassis 60.

During seating the upper chassis 30 on the lower chassis 60, as illustrated in Figures 3 and 4, the roller 80 is guided along the oblique face 90a of the guide block 90. Therefore, along with lowering of the upper chassis 30, the roller 80 is moved to the left of the elongated hole 50d by the oblique face 90a. By the movement of the roller 80 toward the left of the elongated hole 50d, the lever 70 connected to the shaft 80a of the roller 80 is also moved to the left, which in turn moves the pin 45a on the first end of the link 45 to the left.

Accordingly, since the first end of the link 45 is moved to the left, the lid-opening member 44 connected to the second end of the link 45 by means of the pin 45b swings counter-clockwise around the shaft 44a to let the end of the lid-opening member 44, i.e., the end for opening the lid 20a, go down. At this point, the lid 20a is closed by its own spring force, thereby maintaining the state illustrated in Figure 2D.

In order to unload the tape cassette 20 under the state as shown in Figure 2D, if a user releases the eject lever 10, the upper chassis 30 is moved upwardly by the resilience of the fourth and fifth links 60a and 60b to be in the state shown in Figure 2C. Here, the roller 80 is guided along the oblique face 90a of the guide block 90 by the elasticity of the spring 46.

Then, after being released from the oblique face 90a of the guide block 90, the roller 80 is placed on the right end of the elongated hole 50d, so that the link 45 swings the lid-opening member 44 clockwise around the shaft 44a. By doing so, the lid 20a can be open again. As a result, if the eject lever 10 is pressed to be closed under the state shown in Figure 2C, the roller 80 descends along the oblique face 90a of the guide block 90 to close the opened lid 20a as shown in Figure 2D.

Contrary to the above operation, if the eject lever 10 is released under the state shown in Figure 2D, the upper chassis 30 is moved upwardly apart from the lower chassis 60 owing to the resilience of the fourth and fifth links 60a and 60b. At this time, the roller 80 is resiliently guided by the spring 46 while continuously contacting the oblique face 90a of the guide block 90. Also, as shown in Figures 3 and 4, the roller 80 is moved to the right end of the elongated hole 50d to allow the link 45 to be moved to the right end of the elongated hole 50c by means of the lever 70. Then, the link 45 makes the lid-opening member 44 swing to open the closed lid 20a as shown in Figure 2C.

After this, if the user pulls the cassette holder 40, the slide moving apparatus (not shown) is resiliently operated to pull the slider 50 out of the upper chassis 30 to achieve the state shown in Figure 2B. In the state shown in Figure 2B, when the user lifts the cassette holder 40 upwardly, the lid-opening member 44 swings clockwise around the shaft 44a and, by this operation, the lid 20a is closed again by its own resilience to maintain the state shown in Figure 2A.

According to the cassette lid opening and closing system as described above, the lid 20a becomes open while the tape cassette 20 is seated on the slider 50. Then, after the tape cassette 20 is fully seated on the lower chassis 60, the lid 20a is closed to lower the height of the deck which would otherwise be unnecessarily high due to the height of the lid in the open state. Therefore, a very thin deck can be designed.

While a particular embodiment of the present invention has been particularly shown and described, it will be understood by those skilled in the art that various changes in form and details may be effected therein without departing from the spirit and scope of the invention.

In this specification, terms of absolute orientation are used conveniently to denote the usual orientation of items in normal use and/or as shown in the accompanying drawings. However, such items could be disposed in other orientations, and in the context of this specification, terms of absolute orientation, such as "top", "bottom", "left", "right", "vertical" or "horizontal", etc. are to be construed accordingly, to include such alternative orientations.

## Claims

1. A cassette lid opening and closing system for a magnetic recording and/or reproducing apparatus, the system comprising:
a cassette holder (40) arranged to pivot by a predetermined angle around a shaft (40a) on one side of the holder (40) and to hold a cassette tape (20);
a slider (20) having a reel (53) for guiding a hub of said tape cassette (20) and being arranged to slide said cassette holder (40);
a lid-opening member (44) for opening a lid (20a) of said tape cassette (20) during seating of said cassette holder (20) on said slider (50);
a lid-opening member operating link (45) having a first end resiliently mounted within an elongated hole (50c) formed in one side of said slider (50), a second end thereof being supported to pivot with respect to said lid-opening member (44) to cause said lid-opening member (44) to open said lid (20a) when said cassette holder (40) is seated on said slider (50), the cassette lid opening and closing system being characterised by a lever (70) for moving said first end of said lid-opening member operating link (45) when said tape cassette (20) is seated on a chassis (60) to release a lid-pressing operation of said lid-opening member (44), and by lever operating means comprising a roller (80) having a central axis connected to one end of said lever (70) and arranged to run within an elongated hole (50d) formed in said slider (50) and a guide block (90) disposed on said chassis to guide said roller (80) to allow said roller (80) to run within said elongated hole (50d) to operate said lever (70) and close the open lid (20a) of said tape cassette (20) when said tape cassette (20) is seated on said chassis (60).

2. A cassette lid opening and closing system as claimed in claim 1, wherein said guide block (90) has an inclined face for contact with said roller (80) to open and close said lid (20a) during unloading and loading of said tape cassette (20).

3. A magnetic tape recording and/or reproducing apparatus provided with a system according to claim 1, or 2.

## Patentansprüche

1. Kassettenklappen-Öffnungs-und-Schließ-System für eine Magnet-Aufzeichnungs-und/oder-Wiedergabe-Vorrichtung, wobei das System umfaßt:
eine Kassettenaufnahme (40), die um einen vorgegebenen Winkel um eine Welle (40a) auf einer Seite der Aufnahme (40) geschwenkt wird und ein Kassettenband (20) aufnimmt;
einen Gleiter (50) mit einer Winde (53), die eine Nabe der Bandkassette (20) (20) führt und die Kassettenaufnahme verschiebt;
ein Klappenöffnungselement (44), das beim Aufsetzen der Kassettenaufnahme (40) auf den Gleiter (50) eine Klappe (20a) der Bandkassette (20) öffnet;
eine Klappenöffnungselement-Betätigungsverbindungsstange (45) mit einem ersten Ende, das fedemd in einem Längsloch (50c) angebracht ist, das in einer Seite des Gleiters (50) ausgebildet ist, wobei ein zweites Ende derselben so gelagert ist, daß es in bezug auf das Klappenöffnungselement (44) schwenkbar ist, so daß das Klappenöffnungselement (44) die Klappe (20a) öffnet, wenn die Kassettenaufnahme (40) auf den Gleiter (50) aufgesetzt wird, wobei das Kassettenklappen-Öffnungs-und-Schließ-System durch einen Hebel (70) gekennzeichnet ist, der das erste Ende der Klappenöffnungselement-Betätigungsverbindungsstange (45) bewegt, wenn die Band kassette (20) auf ein Chassis (60) aufgesetzt wird, um einen Klappendrückvorgang des Klappenöffnungselementes (44) auslösen, und durch eine Hebelbetätigungseinrichtung, die eine Rolle (80) mit einer Mittelachse umfaßt, die mit einem Ende des Hebels (70) verbunden ist, und die in einem Längsloch (50d) läuft, das in dem Gleiter (50) ausgebildet ist, sowie einen Führungsblock (90), der an dem Chassis (60) angeordnet ist und die Rolle (80) so führt, daß die Rolle (80) in dem Längsloch (50d) laufen kann, um den Hebel (70) zu betätigen und die offene Klappe (20a) der Bandkassette (20) zu schließen, wenn die Bandkassette (20) auf das Chassis (60) aufgesetzt wird.

2. Kassettenklappen-Öffnungs-und-Schließ-System nach Anspruch 1, wobei der Führungsblock (90) eine schräge Fläche aufweist, die mit der Rolle (80) in Kontakt kommt, um die Klappe (20a) beim Einlegen und Herausnehmen der Bandkassette (20) (20) zu öffnen und zu schließen.

3. Magnetband-Aufzeichnungs-und/oder-Wiedergabe-Vorrichtung, die mit einem System nach Anspruch 1 oder 2 versehen ist.

## Revendications

1. Système d'ouverture et de fermeture de couvercle de cassette pour un appareil d'enregistrement et/ou de lecture magnétique, ce système comprenant :
un porte-cassette (40) agencé pour pivoter d'un angle déterminé autour d'un arbre (40a) prévu sur un côté de ce porte-cassette (40) et porter une cassette de bande (20),
un coulisseau (20) ayant une bobine (53) pour guider un moyeu de ladite cassette de bande (20) et agencé pour faire coulisser ledit porte-cassette (40),
un élément d'ouverture de couvercle (44) pour ouvrir un couvercle (20a) de ladite cassette de bande (20) pendant l'application dudit porte-cassette (20) sur ledit coulisseau (50),
une bielle de manoeuvre d'élément d'ouverture de couvercle (45) ayant une première extrémité montée élastiquement dans un trou allongé (50c) fait dans un côté dudit coulisseau (50), la deuxième extrémité de celle-ci étant supportée pour pivoter par rapport audit élément d'ouverture de couvercle (44) pour faire que celui-ci ouvre ledit couvercle (20a) lorsque le porte-cassette (40) est appliqué sur ledit coulisseau (50), le système d'ouverture et de fermeture de couvercle de cassette étant caractérisé par un levier (70) pour déplacer ladite première extrémité de ladite bielle de manoeuvre d'élément d'ouverture de couvercle (45) lorsque ladite cassette de bande (20) est appliquée sur un châssis (60) pour déclencher une opération de pression sur le couvercle dudit élément d'ouverture de couvercle (44), et par un moyen de manoeuvre de levier comprenant un rouleau (80) ayant un axe central joint à une extrémité dudit levier (70) et agencé pour se déplacer dans un trou allongé (50d) fait dans ledit coulisseau (50), et un bloc de guidage (90) placé sur ledit châssis pour guider ledit rouleau (80) pour permettre à celui-ci de se déplacer dans ledit trou allongé (50d) pour manoeuvrer ledit levier (70) et fermer le couvercle (20a) ouvert de ladite cassette de bande (20) lorsque cette dernière est appliquée sur ledit châssis (60).

2. Système d'ouverture et de fermeture de couvercle de cassette selon la revendication 1, dans lequel ledit bloc de guidage (90) a une face inclinée pour contact dudit rouleau (80) avec celle-ci pour ouvrir et fermer ledit couvercle (20a) pendant le déchargement et le chargement de ladite cassette de bande (20).

3. Appareil d'enregistrement et/ou de lecture de bande magnétique pourvu d'un système selon l'une des revendications 1 et 2.
